# EUROPEAN PATENT APPLICATION

(11) **EP 1 253 761 A2**
(43) Date of publication of application: **30.10.2002**
(21) Application number: 01306990.1
(22) Date of filing: 17.08.2001
(51) Int. Cl.: H04L 29/06

(54) **Method of data transfer**

(30) Priority: 23.04.2001 SG 200102248
(71) Applicant: Hewlett-Packard Company, Palo Alto, CA 94304 (US)
(72) Inventor: Gomes, John Isaac Chandan, Singapore 449031 (SG); Tan, Ngee Chuan, Singapore 588195 (SG); Wong, Mun Leong, Singapore 730453 (SG); Tan, Gay Kheun, Singapore 160107 (SG); Kek, Chuan Yew, Singapore 398417 (SG)
(74) Representative: Jehan, Robert

(57) **Abstract**

A method for transferring one of a plurality of data stored in a sub-computer system (110) to a target computer system using a mobile device (100) is provided. In such a method, the mobile device (100) initiates the process by sending instructions to a central computer system (106) via a first network (108). The instructions designate a first piece of data to be transmitted as well as the target computer system to which the first piece of data is to be transmitted. According to the instructions, the central computer system (106) retrieves the designated first piece of data from the sub-computer system. The first piece of data then is transmitted from the central computer system (106) to the target computer system.

## Description

This invention relates to a method for transferring remotely-stored data using a mobile device.

Conventionally, a user who wants to transfer files or documents from one personal computer (PC) to another would need to rely upon a storage medium such as diskettes to copy data and transfer it to the other device(s). This method requires the user to carry the storage medium when the user is away from the PC where the data is saved. Furthermore, such a method may increase the risk of virus infection in that sharing storage media between computers may expose each computer to more virus-infected computers.

Alternatively, the user can use File Transfer Protocol (FTP) to transfer the required document through network, or attach the required document within an email. Both solutions, however, require the user to have access to a PC in order to access the document, directly if the document is saved in the PC or via a network if the document is shared in order to perform the data transfer.

The present invention seeks to provide a convenient method to transfer data even when the user is physically away from a PC and the data.

According to an embodiment of the invention, a method which allows a user of a mobile device to transfer one of a plurality of data stored in a sub-computer system to a target computer system is initiated by composing an instruction in the mobile device. The instruction designates a first piece of data to be transmitted as well as a target computer system to which the first piece of data is to be transmitted. Such an instruction is sent from the mobile device to the central computer system via a first network. The central computer system informs the sub-computer system at least part of the instruction, and the first piece of data is subsequently transmitted from the sub-computer system to the target computer system according to the instruction.

In one embodiment, information for identifying the plurality of data has been stored in the central computer system. Upon a request from the mobile device, this information is sent to the mobile device for the user to designate the first piece of data.

In another embodiment, the first piece of data is first sent to the central computer system. The user also composes a first piece of information in the mobile device, which is transmitted to the central computer system via the first network, preferably together with the instruction. The central computer system accordingly generates a file by combining the first piece of information with the first piece of data, and further transmits the file to the target computer system. Ideally the file is an email attached with the first piece of data.

Embodiments of the present invention are described below, by way of example only, with reference to the accompanying drawings, in which:
Figures 1 and 2 illustrate one embodiment of system;
Figure 3 illustrates in details the step of sending document to the target shown in Figure 2; and
Figures 4 and 5 illustrate another embodiment of system.

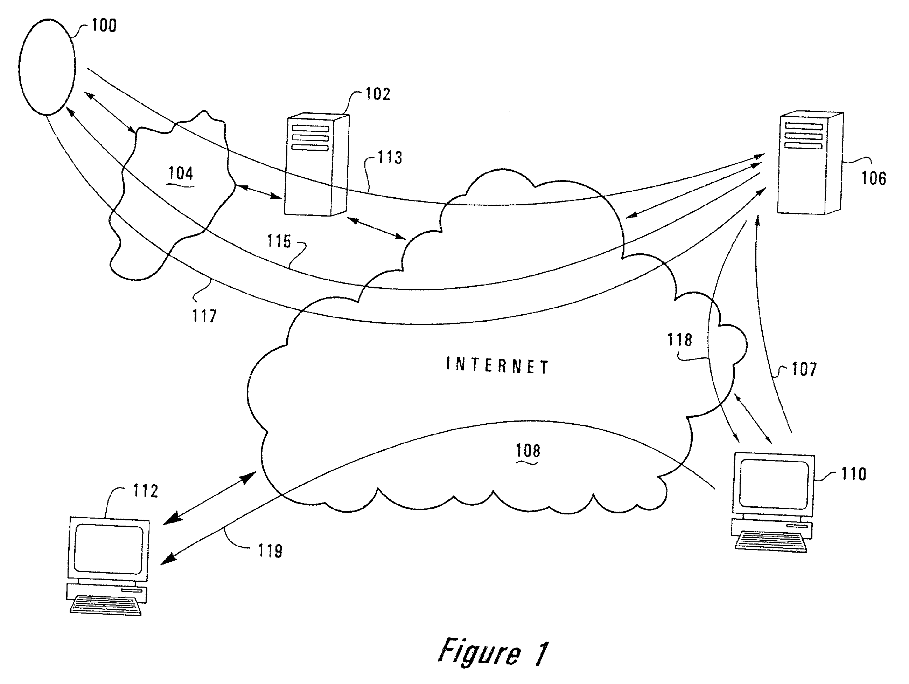

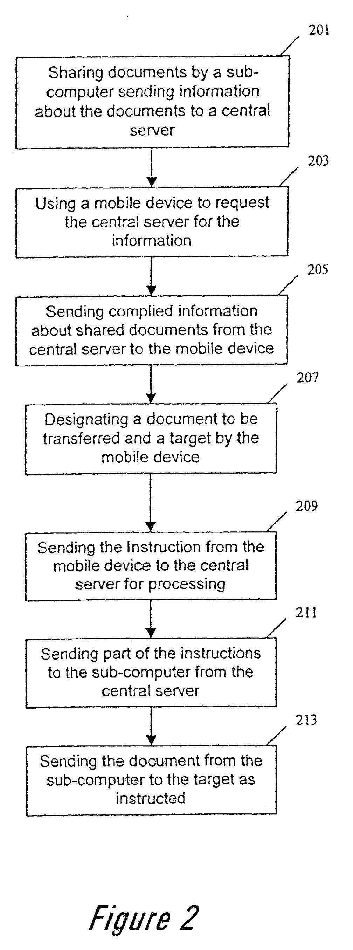

In one embodiment of the invention as shown in Figures 1 and 2, a user of a mobile device 100 such as a mobile phone can use the mobile phone to transfer one of a plurality of documents stored in the user's personal computer 110 to a designated target computer. To enable the user to access the documents remotely, in step 201 the documents have been shared out to a central server 106 via the internet 108, that is, filenames and/or locations of these documents are saved in the central server 106. While the user selects the files to be shared, a string of information is packed into an HTTP (Hiper Text Transfer Protocol) packet in an illustrative format shown below:
- HTTP header
- /MapleWML/CMServer/AddFile.asp
- Username (computer name for identifying the user's personal computer)
- User Password (for the purpose of security)
- User Entered Name (e.g., a friendly name for the file)
- File Size
- HTTP Trailer.

The parameter "User Entered Name" identifies and is associated with the actual location of the individual file to be shared. By selecting such a user-entered name (to be discussed later), the central server 106 and the user's personal computer 110 is able to identify the file to be transmitted.

Such an HTTP packet then will be sent to the central server 106 via the internet 108 as shown by Arrow 107 in Figure 1. In this embodiment, upon receiving it, the central server 106 is activated by the parameter "/MapleWML/CMServer/AddFile.asp" to run a script. Thus the information following this parameter, i.e., the Username, User password, User Entered Name, and File size, will be added to a file database (not shown) of the central server 106. The file database stores the filenames of the files shared out by each user.

Further, in this embodiment, the personal computer 110 is publicly accessible, that is, in a public domain so that by using its Username and User Password, other computers or servers can access and retrieve documents from it. Furthermore, the personal computer needs to be running for the purpose of this invention.

Additionally, in Figure 1, a plurality of target computers 112 is connected to the central server 106 via the internet 106, and is also publicly accessible. As a result, the central server 106 can identify and send files to a designated target computer through the Internet Protocol (IP) address of the designated target computer.

When the user is away from the user's personal computer 110 and wants to transmit a softcopy of a document which is stored in the personal computer 110 and has been shared out, as shown by step 203, the user may use the mobile phone 100 to request the central server 106 for the information about those files that have been shared, referring to Arrow 113 in Figure 1. The request reaches the central server 106 via a Public Switched Telephone Network (PSTN) 104, a gateway 102 and the internet 108. For communication between the mobile device 100 and the gateway 102, standard telecommunication protocols such as Wireless Application Protocols (WAP) are used. It is understood that WAP is only used as a transport layer protocol, which presently sits on GSM. Higher data rate transport layers such as 3G can also be used. In the context of WAP, the mobile phone is WAP-enabled, and the request from the mobile device 100 is in the following illustrative format:
- WAP Header
- Username
- User Password
- WAP Trailer.

The gateway 102 converts the request, as well as instructions (as discussed below), to an HTTP format suitable for transfer through the internet. Subsequently, the gateway 102 passes the request to the central server 106.

It is noted that the mobile device 100 needs to install settings for identifying the gateway 102 and the central server 106 in advance. The mobile device will then be able to contact the appropriate central server 106 via the appropriate gateway 102. Such a technology is well known in the field of wireless communication.

After receiving the request, the central server 106 packs a reply in the following illustrative HTTP format:
- HTTP Header
- <Filename>
- HTTP Trailer,
where the parameter "<Filename>" includes the user-entered-names of all the files shared out by this particular user which is identified by parameters "Username" and "User Password," that is, files which are stored in the personal computer 110 and are shared out. As shown by Arrow 115 in Figure 1, in step 205, the central server 106 further sends its reply through the established connection towards the gateway 102, which in turn would convert the reply into a WAP format for displaying on the mobile device 100.

By using the mobile device 100, in step 207, the user selects a document to be transmitted. The user also designates one of the target computers 112 to which the document is to be transmitted by manually specifying the IP address thereof. Such a selection is incorporated into an instruction, a data transfer instruction in the case of this embodiment, by the mobile device 100 according to the following illustrative format:
- WAP Header
- Username
- User Password
- A First Filename (user-entered-name)
- IP Address of the Designated Target Computer
- WAP Trailer.

The parameter "A First Filename" identifies the location of the document to be printed, while the parameter "IP Address of the Target Computer" identifies the designated target computer to which the document is to be transmitted.

Referring to Arrow 117 in Figure 1, in step 209, the mobile device 100 then sends the data transfer instruction to the central server 106 for processing via the PSTN 104, gateway 102, and the internet 108.

After receiving the data transfer instruction, in step 211, as shown by Arrow 118 in Figure 1, the central server 106 sends the personal computer 110 the contents of the parameters "A First Filename" and "IP Address of the Designated Target Computer." The central server 106 identifies and accesses the personal computer 110 by using the parameters of "Username" and "User Password."

The personal computer 110 accordingly retrieves the designated document as specified by parameter "A First Filename." Subsequently, the personal computer 110 locates the designated target computer through its IP Address as specified in the data transfer instruction, and in step 213 directly transmits the retrieved document to the designated target computer via the internet 108 (referring to Arrow 119), by using FTP which is well known in the art. A data transfer from the user's personal computer 110 to the designated target computer using the mobile device is thus accomplished.

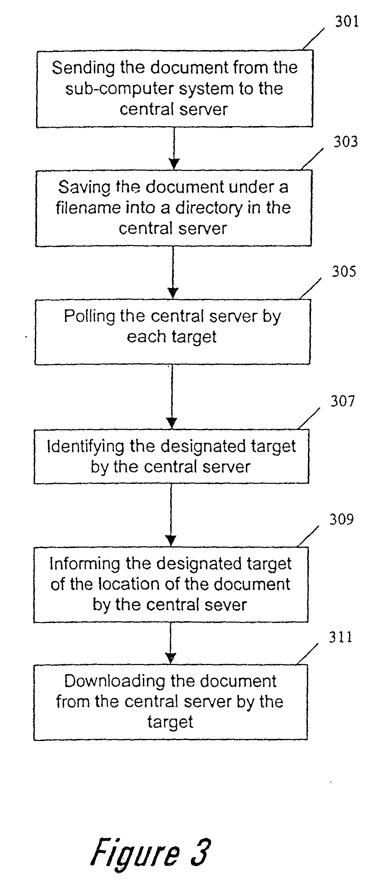

Alternatively, as shown in Figure 3, after retrieving the designated document, the personal computer 110 packs the retrieved document into an HTTP packet, for example:
- HTTP Header
- /MapleWML/CMServer/FileUpload.asp
- Username
- User Password
- A First Filename
- Size of the File
- File Content
- HTTP Trailer.

Then, in step 301, the HTTP packet is sent to the central sever 106 which is initiated by the parameter "/MapleWML/CMServer/FileUpload.asp" to retrieve the information contained therein, including the designated document which is the content of parameter "File Content." When the central server 106 has uploaded the designated document, in step 303, it saves the document into a "Temp" directory (not shown) in the central server under a unique filename. In step 305, the plurality of target computers 112 periodically polls the central server 106 according to the following illustrative format:
- HTTP Header
- IP Address
- HTTP Trailer.

The central server 106 identifies the designated target computer in step 307 by comparing the IP Address retrieved from such a poll with the one in the data transfer instruction. After the comparison, in step 309, the central server 106 consequently informs the designated target computer of the location and the unique filename of the uploaded designated document. In turn, the designated target computer downloads the designated document form the central server "Temp" directory by using Microsoft Foundation Class application program interface (API) "ClnternetSession" in step 311.

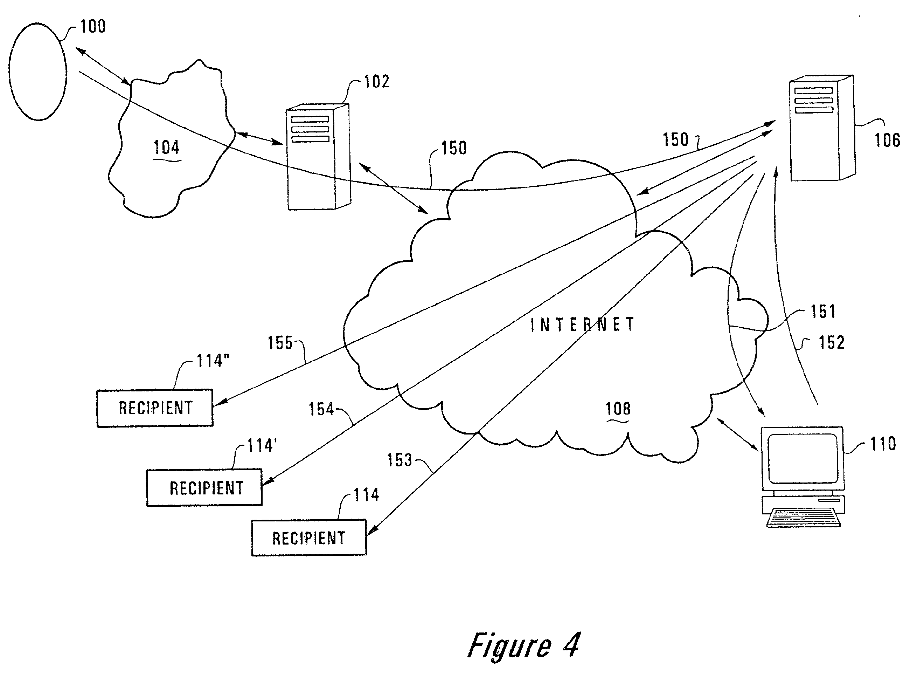

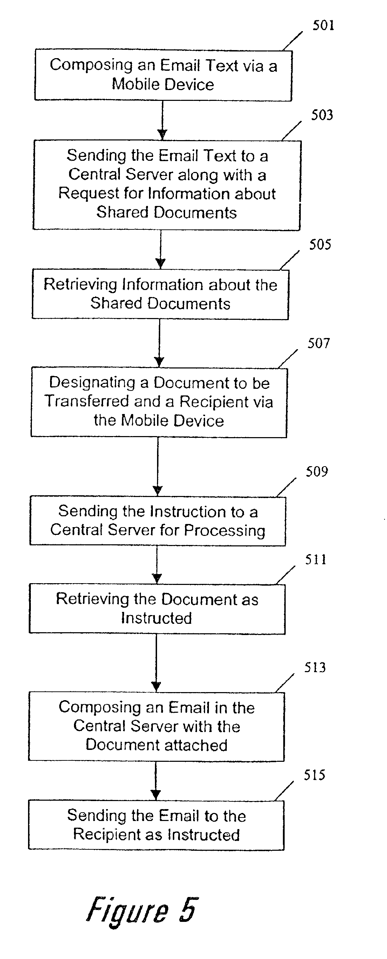

In another embodiment of the invention as shown in Figures 4 and 5, the user can transmit a softcopy of the document stored in the user's personal computer 110 to a plurality of recipients 114, 114', and 114" by sending the recipients an email with an attachment of the document.

Information of the user's SMPT (simple mail transfer protocol) server account, for example, SMTP server IP address and the port, needs to be given to the central server 106 in advance. The central server 106 receives emails text from the user, and after processing, further sends the email to the SMTP server for distribution.

In the preferred embodiment, in step 501 the user uses the mobile phone to specify the recipient(s) email address (To), Copy to Recipient(s) email address (Cc:), and the email subject. The user also uses the mobile phone to compose the email body in step 501, and then in step 503 send the central sever 106 the email (see Arrow 150 in Figure 4), together with a request for information about those files he has shared. Such a request is the same as the request described in the first embodiment.

Similarly to the embodiment described above, in step 505, the central sever 106 passes the mobile phone the user-entered-names of all the files shared out by this particular user. The user can then designate a document to be sent to the recipients in a data transfer instruction (referring to step 507). The data transfer instruction is the same as the one described in the first embodiment except that the user does not need to specify the IP address of a target computer since the recipients have been identified by the email addresses. Similarly, such an instruction is sent in step 509 from the mobile phone to the central server 106 via the PSTN 104, gateway 102, and internet 108. The central server 106 further passes information identifying the designated document to the personal computer 110 (see Arrow 151 in Figure 4). In step 511, the personal computer 110 retrieves the designated document, and send it to the central server 106 via the internet 108 (see Arrow 152).

With the information provided by the user such as the email address etc, in step 513, the central server packs the email body text and an attachment, i.e., the document retrieved from the personal computer 110, into a multipurpose internet mail extension (MIME) format for sending via the SMTP server (not shown). As shown by Arrows 153, 154, and 155, in step 515, the email, attached with a MIME encoded designated document, will subsequently be sent to the specified recipients through the SMTP server which is a standard server implementing Simple Mail Transfer Protocol (SMTP) which is specialized in sending emails.

Other alternatives can be made to the above-described embodiments. For example, the documents can be forwarded to and stored in the central server 106 in advance so that the central server 106 will retrieve the designated document directly from its storage unit (not shown) when it has retrieved the data transfer instruction.

Besides, the user may send the central server 106 a combined data transfer instruction in the following illustrative format:
- WAP Header
- Username
- User Password
- A First Filename
- IP Address of the Designated Target Computer
- WAP Trailer.

Thus, the central server 106 directly gets the information about the document to be retrieved, as well as the address of the designated target computer to which the document is to be transmitted, without replying to and waiting for selections from the mobile device 100. In this case, the user may need to input the desired First Filename manually, unless this information is already stored in the mobile device. if the user's personal computer 110, like the central server 106, is capable of communicating with the mobile device 100 directly via PSTN 104, the gateway 102, and the internet 108, however, the user can send the combined data transfer instruction to the user's personal computer directly, rather than through the central server 106.

Furthermore, multiple documents can be transmitted simultaneously by designating multiple filenames in the data transfer instruction. After retrieving all the designated documents, the central server packs them together or into a single email, and further passes to the designated target computer or the recipients.

The plurality of target computers 112 can also be registered in the central server 106. As a result, the central server 106 knows where the target computers 112 are through target computers' identifications (IDs) which are user-friendly names and are associated with the corresponding IP addresses. Similarly, the target computers 112 get registered by sending the central server 106, for example, an HTTP packet in the following illustrative format:
- HTTP header
- /MapleWML/CMServer/ApplianceLogin.asp
- Target Computer ID
- HTTP Trailer,
where the parameter "/MapleWML/CMServer/ApplianceLogin.asp" activates the central server 106 to run a script such that the information following this parameter in the packet will be loaded to an appliance database (not shown) of the central server 106. The parameter "Target Computer ID" which is associated with its IP address identifies the target computer to be registered. When the user requests the central server for the information about the files that have been shared, the central server sends the mobile device a list of registered target computer IDs, in addition to the parameter <Filename>. Therefore, the user can designate a target computer by specifying its target computer ID instead in the data transfer instruction.

Additionally, other mobile devices such as personal digital assistants can be used on condition that they are able to communicate with the gateway 102.

The disclosures in Singapore patent application No. 200102248-2 from which this application claims priority, and in the abstract accompanying this application are incorporated herein by reference.

## Claims

1. A process of using a mobile device to transfer one of a plurality of data being stored in a sub-computer system to an target computer system, the process including the steps of:
designating a first piece of data to be transferred and the target computer system to which the first piece of data is to be transferred as an instruction in the mobile device;
sending the instruction from the mobile device to a central computer system via a first network;
informing the sub-computer system of at least part of the instruction by the central computer system; and
transmitting the first piece of data from the sub-computer system to the target computer system via a second network according to the instruction.

2. A process as in claim 1, including the steps of:
storing information relating to identifications of the plurality of data in the central computer system; and
sending said information from the central computer system to the mobile device for designating the first piece of data.

3. A process as in claim 2, including the steps of:
using the mobile device to request the central computer system to send said information.

4. A process as in claim 1, 2 or 3, including the steps of:
sending the first piece of data from the sub-computer system to the central computer system according to said part of the instruction;
saving the first piece of data under a filename in the central computer system;
informing the target computer system of the filename by the central computer system; and
downloading the first piece of data from the central computer system by the target computer system according to the filename.

5. A process as in any preceding claim, wherein an identification of the target computer system is known to the central computer system, and wherein the step of designating the target computer system includes specifying its identification in the instruction.

6. A process as in any preceding claim, wherein the step of designating the first piece of data includes identifying location of the first piece of data in the instruction.

7. A process as in any preceding claim, wherein the step of designating the target computer system includes specifying the target computer's internet protocol address in the instruction.

8. A process, as in any preceding claim, including the steps of:
composing a first piece of information in the mobile device;
transmitting the first piece of information from the mobile device to the central computer system via the first network;
generating a file in the central computer system by combining the first piece of information with the first piece of data retrieved; and
transmitting the file to the target computer system.

9. A process as in claim 8, wherein the step of composing includes composing an email, and wherein the target computer is designated by specifying in the first piece of information an email address relating to the target computer.

10. A process as in claim 9, wherein the step of generating the file includes attaching the first piece of data within the email.

11. A process of using a mobile device to transfer one of a plurality of data which is stored away from a mobile device to an target computer system, the process including the steps of:
designating a first piece of data to be transferred and the target computer system to which the first piece of data is to be transferred as an instruction in the mobile device;
sending the instruction from the mobile device to a computer system via a first network, the computer system being capable of accessing the plurality of data and communicating with the mobile device via the first network;
retrieving the first piece of data by the computer system according to the instruction; and
transmitting the first piece of data from the computer system to the target computer system via a second network according to the instruction.

12. A process of using a mobile device to transfer one of a plurality of data being stored in a sub-computer system to an target system, the process including the steps of:
storing information relating to identifications of the plurality of data in a central computer system;
using the mobile device to request the central computer system to send said information to the mobile device via a first network;
sending said information from the central computer system to the mobile device via the first network;
designating a first piece of data to be transferred by using said information and the target computer system to which the first piece of data is to be transferred as an instruction in the mobile device;
sending the instruction from the mobile device to the central computer system via the first network;
informing the sub-computer system of at least part of the instruction by the central computer system; and
transmitting the first piece of information from the sub-computer system to the target computer system according to the instruction.

13. A process of using a mobile device to send an email with an attachment which is selected from a plurality of data being accessible by a computer system, including the steps of:
storing information relating to identifications of the plurality of data in a central computer system;
using the mobile device to request the central computer system to send said information to the mobile device via a first network;
sending said information from the central computer system to the mobile device via the first network;
using the mobile device to compose an email text, specify recipients of the email, and designate a first piece of data to be attached with the email as an instruction;
sending the email text and the instruction from the mobile device to the computer system;
informing the computer system of the recipients for the email by the mobile device via the first network;
retrieving the first piece of data by the computer system according to the instruction;
using the email text and the recipient to compose the email with the first piece of data attached by the computer system; and
sending the email from the computer system to the recipients via a second network.
